# FASCICULE DE BREVET EUROPEEN

(11) **EP 0 974 838 B1**
(45) Date de publication et mention de la délivrance du brevet: **22.02.2006**
(21) Numéro de dépôt: 99401728.3
(22) Date de dépôt: 09.07.1999
(51) Int. Cl.: G01N 30/34, B01D 15/08, B01F 15/04, B01D 3/36

(54) **Dispositif de régulation en continu de la composition d'un mélange de composants et système de séparation de constituants incorporant ce dispositif d'analyse**
Vorrichtung zur kontinuierlichen Regelung der Zusammensetzung einer Mischung von Komponenten und Trennungssystem von Bestandteilen, das diese analytische Vorrichtung umfasst
Device for continuous control of the composition of a mixture of components and system for separating constituents incorporating this analytic device

(30) Priorité: 24.07.1998 FR 9809540
(43) Date de publication de la demande: 26.01.2000
(73) Titulaire: Institut Français du Pétrole, 92852 Rueil-Malmaison Cedex (FR); Novasep, 54502 Vandoeuvre-Les Nancy cedex (FR)
(72) Inventeur: Blehaut, Jean, 54000 Nancy (FR); Nicoud, Roger-Marc, 54630 Richardmesnil (FR)

(56) Documents cités:
- EP-A- 0 754 491
- US-A- 4 877 522
- US-A- 5 522 660

## Description

La présente invention concerne un dispositif de régulation en continu de la composition d'un mélange binaire de composants, et un système de séparation de constituants incorprant ce dispositif de régulation.

Le dispositif de régulation selon l'invention trouve de nombreuses applications. Il peut être utilisé isolément par exemple pour le contrôle de l'homogénéité des mélanges de liquides ou être combiné notamment :
- à des systèmes de séparation dits à lits mobiles simulés ;
- à des systèmes de séparation dits « en batch » de type HPLC préparative par exemple ;
- à des colonnes de distillation pour des analyses en ligne de la composition du distillat ou du bouilleur et pour optimiser le contrôle des procédés de distillation binaire en discontinu (en batch) ;
- à des systèmes de séparation comportant une ou plusieurs membranes de nanofiltration.

Il existe dans l'industrie de nombreux procédés de séparation continue par adsorption sélective d'au moins un composant parmi plusieurs au sein d'un mélange de fluides, notamment des procédés de chromatographie dits à contre-courant simulé où l'on utilise la propriété de solides poreux, en présence de mélanges liquides, gazeux ou supercritiques, de retenir plus ou moins fortement les différents constituants du mélange.

Les procédés de séparation ou fractionnement basés sur la chromatographie sont le plus souvent mis en oeuvre dans un système comportant un ensemble de colonnes ou fractions de colonnes interconnectées en série, formant une boucle. Un solide poreux, de granulométrie déterminée constitue la phase stationnaire. Le mélange F à séparer est introduit dans la boucle puis déplacé au moyen d'un fluide vecteur l'éluant E et les différents constituants sortent successivement selon qu'ils sont retenus plus ou moins fortement par la phase stationnaire. Le long de cette boucle sont répartis des points d'injection pour le mélange à séparer F et le solvant ou éluant E, et des points d'extraction de fluides : extrait EX et raffinat RA, délimitant différentes zones. Le nombre de zones peut varier mais le plus souvent les systèmes de séparation comportent quatre zones principales.

Dans les procédés de séparation à lits mobiles simulés la phase solide est disposée dans un certain nombre n de lits fixes (en général, 4 ≤ n ≤ 24), disposés en série et c'est le profil de concentrations que l'on déplace à vitesse sensiblement uniforme tout autour d'une boucle termée par un décalage successif des points d'injection et de soutirage à l'aide d'une vanne rotative ou plus simplement d'un ensemble de vannes tout-ou-rien convenablement commandées. Ce décalage circulaire, effectué à chaque période T, des différents débits liquides d'entrée-sortie dans un sens donné permet de simuler un déplacement de l'adsorbant solide dans l'autre sens. Les débits liquides d'entrée principaux sont les suivants : le débit de charge F et le débit d'éluant E. Suivant la configuration choisie, selon qu'on utilise ou non une pompe de recyclage dans le cycle, les débits de sortie en extrait EX ou en raffinat RA, peuvent être contrôlés par la pression à l'aspiration de la pompe de recyclage ou à l'aide de débitmètres.

Des procédés par chromatographie en lit mobile simulé sont par exemple décrits dans les brevets EP 0.415.822, 0.568.407, FR 2.699.917, 2.704.158, et les demandes de brevet FR 97/05.485 ou 97/07.756

Dans les procédés de chromatographie industriels, un des paramètres principaux permettant l'adsorption sélective des espèces à séparer et/ou leur solubilité dans l'éluant, est la polarité de l'éluant. Le plus souvent, l'éluant permettant une productivité optimale du procédé est un mélange binaire de deux solvants de polarités différentes.

Il importe pour une bonne stabilité du point de fonctionnement de la boucle, que le mélange fluide (éluant) servant de vecteur aux constituants de la charge dans la boucle de séparation, ait une composition bien définie, où la proportion de chacun des solvants reste bien constante. Or l'éluant est en général recyclé par évaporation et/ou distillation, en sortie du système de séparation. Les solvants constituant l'éluant ont souvent des volatilités différentes. Dans le cas de mélanges non idéaux en présence d'un azéotrope, il arrive aussi que la composition de l'éluant soit différente de celle de l'azéotrope. Il en résulte que la composition du mélange recylé après usage, est modifiée. Il est donc nécessaire que l'on rétablisse la composition de consigne et donc de pouvoir mesurer ses variations en continu.

Le système de séparation selon l'invention comprend une unité de séparation (lit mobiles simulé, colonne de distillation, etc.) et un dispositif d'alimentation de l'unité de séparation avec un mélange de liquides constitué d'au moins deux composants de polarités différentes.

Le système est caractérisé en ce que le dispositif d'alimentation comporte un réservoir de stockage recevant du mélange provenant du système de séparation, au moins un récipient auxiliaire contenant un des composants du mélange, et des moyens pour contrôler le transfert de ce composant depuis le récipient auxiliaire vers le réservoir de stockage, ces moyens comprenant au moins une sonde capacitive totalement immergée dans le mélange fluide, une sonde de mesure de la température du mélange, une sonde de mesure du niveau du mélange dans le réservoir de stockage, et un ensemble de régulation connecté aux différentes sondes et adapté à déterminer le volume d'au moins un des composants à transférer dans le réservoir de stockage, pour rétablir une composition de consigne pour le mélange.

On utilise de préférence des sondes capacitives immergées adaptées à générer un courant dépendant de la composition instantanée du mélange de composants et de la température, et l'ensemble de régulation est adapté à déterminer le volume d'au moins un des composants du mélange en fonction de la composition instantanée du mélange, de la composition de consigne, du volume du mélange dans le réservoir, et de la composition d'au moins un composant d'appoint.

De préférence, le système comporte des moyens de brassage dans le réservoir de stockage et des moyens associés à celui-ci pour maintenir sensiblement constante la température du mélange.

Suivant un mode de réalisation, le système comporte une sonde de référence capacitive immergée dans un mélange liquide de composition connue (obtenu par exemple en mixant les mêmes composants) et maintenu à une température constante, et l'ensemble de régulation est adapté à réguler la composition du mélange dans le réservoir de stockage par référence à l'intensité du courant délivré par la dite sonde de référence.

On peut utiliser notamment des sondes capacitives immergées comportant une électrode centrale allongée entourée d'une électrode de masse qui peut être tubulaire et de préférence ajourée pour permettre une meilleur circulation du mélange dans l'espace inter-électrodes, et un générateur de courant proportionnel aux variations de la capacité inter-électrodes.

L'unité de séparation comprend par exemple une boucle de séparation de constituants d'une charge, qui est connectée au dispositif d'alimentation et comporte des moyens pour injecter la charge dans la boucle de séparation et des moyens pour séparer du mélange liquide, les constituants extraits de la charge.

Suivant un mode de réalisation, le système comporte des récipients auxiliaires de préparation de la charge et des circuits pour connecter sur commande la sortie du réservoir aux récipients auxiliaires.

L'unité de séparation peut, selon les cas, comporter une unité à lit mobile simulé ou une colonne de distillation ou une ou plusieurs colonnes chromatographiques réalisant par exemple de la chromatographie supercritique ou une ou plusieurs membranes de nanofiltration.

Suivant un mode de réalisation, l'unité de séparation comporte par exemple des moyens d'évaporation à film tombant et un condenseur connecté au réservoir de stockage.

D'autres caractéristiques et avantages de l'invention, apparaîtront à la lecture de la description ci-après d'un exemple non limitatif de réalisation, en se référant aux dessins annexés où :
- la Fig. 1 illustre la combinaison fonctionnelle du dispositif de régulation avec un système de séparation ;
- la Fig. 2 montre schématiquement l'agencement du dispositif de régulation ;
- la Fig. 3 montre schématiquement un exemple de sonde capacitive immergée de détection des variations de la composition d'un mélange de fluides ;
- la Fig. 4 montre le schéma synoptique d'un exemple de dispositif de régulation de la composition d'un mélange, associé à un système chromatographique de séparation de constituants ;
- la Fig. 5 montre un exemple de courbe d'étalonnage des variations de l'intensité 1 délivrée par une sonde capacitive immergée, en fonction de la variation du pourcentage d'acétate d'éthyle (EA) dans un mélange à 15°C contenant également de l'heptane ;
- la Fig. 6 montre deux courbes de variation de la capacité inter-électrodes de la sonde de détection, (obtenues par régression linéaire), en fonction de la variation du pourcentage d'acétate d'éthyle (EA), la courbe A correspondant à un mélange anhydre de solvants, la courbe B correspondant à un mélange de solvants saturé en eau ;
- la Fig.7 montre une courbe (obtenue par régression linéaire) de variation de l'intensité I délivrée par la sonde de détection en fonction de la variation du pourcentage d'acétate d'éthyle (EA) dans un mélange, pour une température de 21.2 °C (courbe A) et les points de mesure correspondants pour deux autres températures : 24.2 °C (courbe B) et 26.2 °C (courbe C); et
- la Fig.8 montre un organigramme de calcul de l'apport d'un composant permettant de maintenir la composition du mélange.

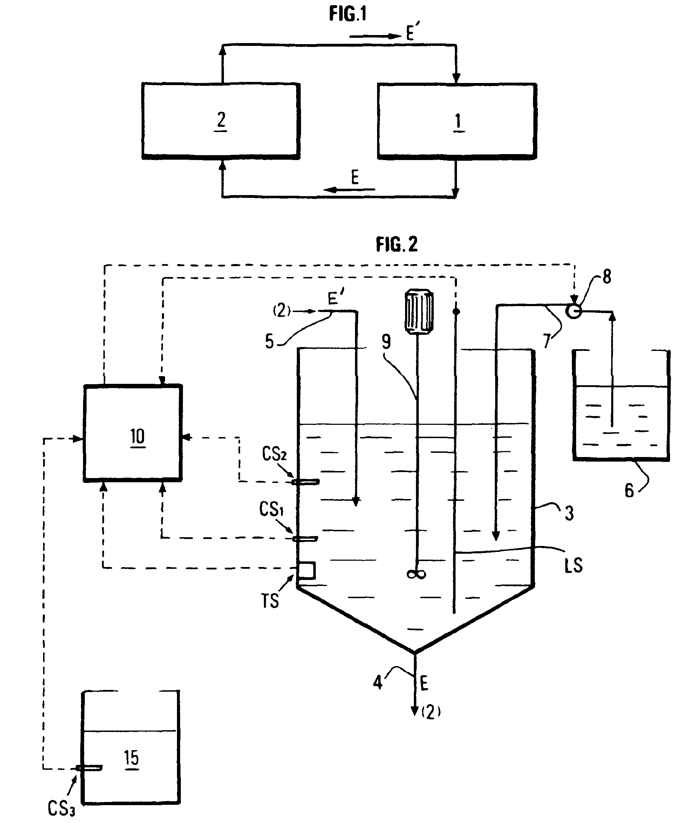

Le dispositif de régulation 1 (Fig.1) peut être associé par exemple dans un système 2 de séparation des constituants. Il lui fournit un mélange fluide E de composition régulée, constitué d'au moins deux substances différentes E1, E2, et après circulation dans le système de séparation, un mélange E lui est restitué où la proportion de chacune des substances composantes est généralement différente de celle du mélange régulé E. Il peut s'agir par exemple d'un système de séparation de constituants d'une charge où le mélange fluide qui est constitué d'au moins deux solvants de volatilité différentes, est utilisé par exemple comme fluide de transport.

Le dispositif 1 comporte (Fig.2) un réservoir de stockage d'un mélange fluide E constitué par exemple de deux solvants E1, E2, alimentant le système de séparation par une canalisation 4. Le mélange E' est restitué au réservoir par la canalisation 5. Pour rétablir le dosage initial des deux solvants dans le mélange, on dispose d'une réserve du solvant le moins volatil (E2 par exemple) que l'on prélève dans un réservoir auxiliaire 6 relié au réservoir 3 par un circuit 7, au moyen d'une pompe 8. Un dispositif de brassage 9 homogénéise le mélange dans le réservoir 3. La pompe 8 est actionnée sélectivement par un ensemble de contrôle 10, en fonction de la valeur de certains paramètres mesurés par différentes sondes de mesure associées au réservoir 3.

Une première sonde LS de type capacitif par exemple mesure le niveau de mélange dans le réservoir 3. Une deuxième sonde TS mesure la température du mélange. La composition du mélange dans le réservoir 3, est mesurée en permanence par au moins une sonde de détection CS1.

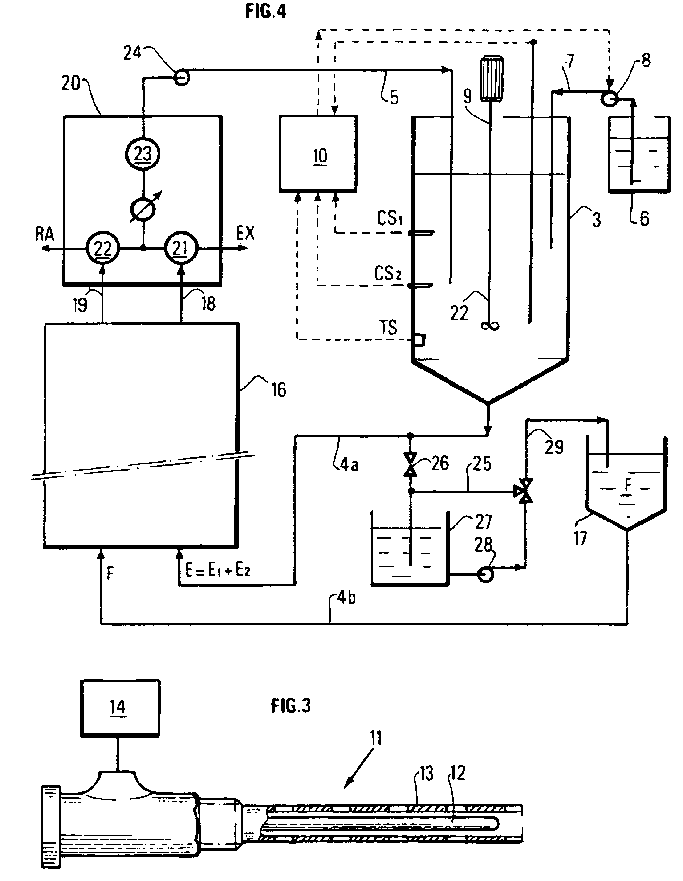

Cette sonde CS1 comporte par exemple un capteur capacitif 11 entièrement immergé de type connu pourvu (Fig. 3) d'une électrode centrale 12 entourée d'une électrode de masse 13, qui peut être tubulaire et de préférence ajourée. Cette électrode de masse peut néanmoins être constituée par une paroi conductrice du réservoir 3. La capacité inter-électrodes dépendant de la permittivité électrique du mélange et donc des permittivités respectives des solvants E1, E2, la sonde est sensible aux variations de la composition du mélange. Le capteur 11 est associé à un générateur de courant ou transmetteur 14 du type 4-20 mA. qui débite un courant I dépendant de la composition du mélange et de la température T. On en déduit la composition instantanée C, du mélange qui est une fonction f₁ du courant I et de l'écart de température (T - T₀) où T₀ représente la température de référence à laquelle la sonde a été étalonnée.

Dans une certaine gamme de température et de composition, les variations de l'intensité en fonction de ces deux paramètres peuvent être approximées par des droites et la fonction f peut y être définie par :
Ci(T₀) = a.I + b, selon un étalonnage à température contrôlée T₀ et
Ci(T) = f₁(I,T) = Ci(I. T₀) + d = a.I + b + d.

La fonction f₁ est déterminée expérimentalement. On tient compte des variations de l'intensité délivrée par la sonde CS avec la température par étalonnage préalable. Une deuxième sonde CS2 identique à la première peut être disposée également dans le réservoir, permettant de corroborer les signaux de mesure délivrés par la première.

Les signaux délivrés par les différentes sondes ou capteurs LS. TS, CS1 et éventuellement CS2, sont appliqués à l'ensemble de contrôle 10, qui détermine le volume ΔV de constituant à prélever dans le réservoir auxiliaire 6 pour réguler autour de la composition de consigne C_{C} la composition Ci(t) de l'éluant dans le réservoir 3. On utilise par exemple un microprocesseur programmé pour calculer :
ΔV = f₂(C₁, C_{C}, V_{E}, C_{A}) où C_{A} représente la composition du solvant d'appoint.

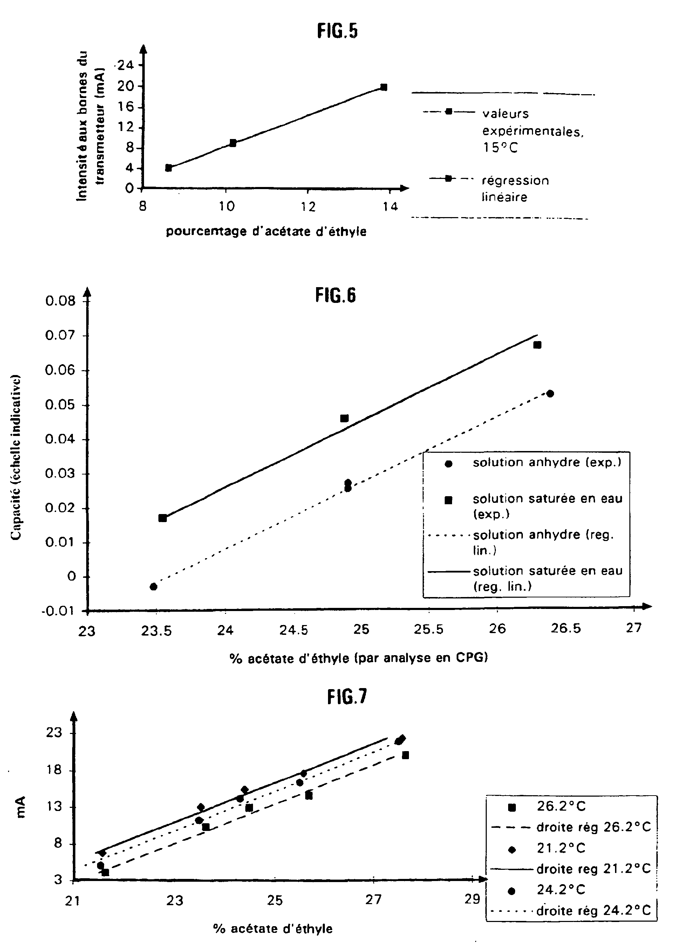

Des étalonnages préalables permettent de déterminer la fonction f₂ à appliquer, convenant aux conditions expérimentales de fonctionnement du système de séparation comme le montrent les courbes expérimentales des Fig.5 à 7.

Le volume correctif nécessaire ΔV peut être transféré en utilisant une pompe 8 à débit constant en jouant sur la durée de l'intervalle de temps de transfert du solvant depuis le récipient 6.

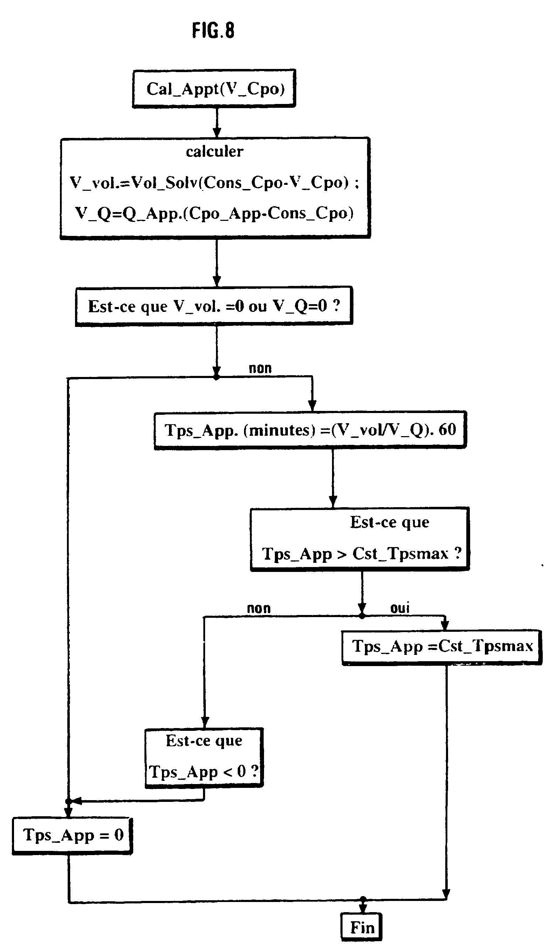

Sur la Fig.8 qui montre un organigramme de calcul du temps de transfert, les symboles suivants signifient :
Q_App. est le débit de la pompe d'appoint (en l/h) ;
Cons_Cpo, la consigne de composition souhaitée du mélange E de solvants;
Cpo_App., la composition du solvant d'appoint E2 ;
Vol_Solv., la mesure du volume de solvant dans le réservoir 3 (en litres);
Tps_App., l'intervalle de temps de transfert du solvant E2, résultat du calcul ; et
V_Cpo., la composition courante du mélange E.

Suivant une variante de réalisation, on peut connecter aussi à l'ensemble de contrôle 10, une sonde de référence CS3 (Fig. 2), baignant dans un mélange de composition connue (identique à la composition de consigne C, par exemple) contenu dans un récipient thermostaté 15 à une température fixe, ce qui facilie la discrimination des variations de courant des sondes CS liées spécifiquement à des variations de la composition du mélange.

Si l'ensemble de contrôle 10 détecte des variations de la composition du mélange, il commande le pompage du solvant E2 dans le réservoir auxiliaire 6.

Le dispositif de régulation 1 précédemment décrit peut être combiné par exemple (Fig.4) à un système de séparation comportant une boucle 16 de séparation à lit mobile simulé où le mélange E est utilisé comme éluant. La boucle 16 comporte deux entrées, une première reliée par le circuit 4A au réservoir d'éluant 3 et une deuxième entrée reliée à un réservoir 17 contenant une charge F par un circuit 4B. La boucle 16 comporte deux sorties, reliées par deux circuits 18, 19 respectivement à deux entrées d'un ensemble de séparation 20 destiné à séparer du flux d'éluant, un extrait EX d'une part et un raffinat RA d'autre part.

Cet ensemble de séparation 20 comporte par exemple des évaporateurs dits à films tombants 21, 22 où l'on fait évaporer l'éluant. Les vapeurs d'éluant sont recueillies dans un condenseur 23 et recyclées dans le réservoir 3 par le circuit 5, au moyen d'une pompe 24. Du fait de leurs volatilités différentes, la composition de l'éluant E' recyclé dans le réservoir 3 est modifiée, ce qui rend donc nécessaire sa régulation, comme on l'a expliqué ci-dessus.

Le réservoir d'éluant 3 est connecté également par un circuit 25 portant une vanne de commande 26, à un préparateur de charge 27 où la charge F destinée à être injectée dans la boucle 16, est au préalable mélangée à l'éluant. La charge préparée est transférée par une pompe 28 et un circuit 29 dans le réservoir de stockage de charge 13.

## Revendications

1. Système de séparation de constituants comprenant une unité (2) de séparation et un dispositif (1) d'alimentation de l'unité de séparation avec un mélange de liquides constitué d'au moins deux composants de polarités différentes, **caractérisé en ce que** le dispositif d'alimentation comporte un réservoir de stockage (3) recevant du mélange provenant de l'unité de séparation, au moins un récipient auxiliaire (6) contenant un des composants du mélange, et des moyens pour contrôler le transfert du dit composant depuis le récipient auxiliaire (6) vers le réservoir de stockage (3), ces moyens comprenant au moins une sonde capacitive (CS) totalement immergée dans le mélange fluide, une sonde (TS) de mesure de la température du mélange, une sonde (LS) de mesure du niveau du mélange dans le réservoir de stockage (3), et un ensemble de régulation (10) connecté aux différentes sondes et adapté à déterminer le volume d'au moins un des composants à transférer dans le réservoir de stockage (3), pour rétablir une composition de consigne pour le dit mélange.

2. Système de séparation selon la revendication 1, **caractérisé en ce que** chaque sonde capacitive immergée (CS) est adaptée à générer un courant dépendant de la composition instantanée du mélange de composants et de la température, et l'ensemble de régulation (10) est adapté à déterminer le volume (ΔV) d'au moins un des composants du mélange en fonction de la composition instantanée (C₁) du mélange, de la composition de consigne (C_{C}), du volume (V_{E}) du mélange dans le réservoir, et de la composition (C_{A}) d'au moins un composant d'appoint.

3. Système de séparation selon la revendication 1 ou 2, **caractérisé en ce qu'**il comporte des moyens de brassage (9) dans le réservoir de stockage (3) et des moyens pour maintenir sensiblement constante la température du mélange dans celui-ci.

4. Système de séparation selon l'une des revendications précédentes, **caractérisé en ce qu'**il comporte une sonde de référence capacitive (CS3) immergée dans un mélange fluide de composition connue maintenu à une température constante, l'ensemble de régulation (10) étant adapté à réguler la composition du mélange dans le réservoir de stockage (3) par référence à l'intensité du courant délivré par la dite sonde de référence.

5. Système de séparation selon la revendication 4, **caractérisé en ce que** le mélange fluide est obtenu en mixant les mêmes composants que ceux du mélange dans le réservoir (3) de stockage.

6. Système de séparation selon l'une des revendications précédentes, **caractérisé en ce que** chaque sonde capacitive immergée comporte une électrode centrale allongée (12) entourée d'une électrode de masse tubulaire (13), et un générateur (14) de courant proportionnel aux variations de la capacité inter-électrodes.

7. Système de séparation selon l'une des revendications précédentes, **caractérisé en ce que** l'unité de séparation comporte une boucle de séparation (16) des constituants d'une charge (F) connectée au dispositif d'alimentation, des moyens (17) pour injecter la charge (F) dans la boucle et des moyens (20) pour séparer du mélange fluide, les constituants extraits de la charge (F).

8. Système selon la revendication 7, **caractérisé en ce qu'**il comporte des récipients auxiliaires (17, 27) de préparation de la charge (F) et des circuits (25, 26) pour connecter sur commande la sortie du réservoir (3) aux dits récipients auxiliaires.

9. Système selon l'une des revendications précédentes, **caractérisé en ce** l'unité de séparation (2) est à lit mobile simulé.

10. Système selon l'une des revendications précédentes, **caractérisé en ce** l'unité de séparation (2) comporte une colonne de distillation.

11. Système selon l'une des revendications précédentes, **caractérisé en ce** l'unité de séparation (2) comporte une ou plusieurs colonnes chromatographiques.

12. Système selon l'une des revendications précédentes, **caractérisé en ce** l'unité de séparation (2) est adaptée pour réaliser de la chromatographie supercritique et comporte une ou plusieurs colonnes chromatographiques.

13. Système selon l'une des revendications précédentes, **caractérisé en ce que** l'unité de séparation (2) comporte une ou plusieurs membranes de nanofiltration.

14. Système selon l'une des revendications précédentes, **caractérisé par** un ensemble de séparation (20) comportant des moyens d'évaporation à film tombant (21, 22) et un condenseur (23) connecté au réservoir de stockage (3).

## Claims

1. Component separation system comprising a separation unit (2) and a device (1) for supplying the separation unit with a mixture of liquids formed of at least two components of different polarities, **characterised by** the fact that the supply device includes a storage tank (3) receiving mixture from the separation unit, at least one auxiliary container (6) containing one of the components of the mixture, and means for controlling the transfer of the said component from the auxiliary container (6) to the storage tank (3), these means comprising at least one capacitance probe (CS) totally immersed in the fluid mixture, a probe (TS) for measuring the temperature of the mixture, a probe (LS) for measuring the level of the mixture in the storage tank (3), and a control unit (10) connected to the different probes and suitable to determine the volume of at least one of the components to be transferred into the storage tank (3), to re-establish a setpoint composition for the said mixture.

2. Separation system as described in claim 1, **characterised by** the fact that each immersed capacitance probe (CS) is suitable to generate a current dependent on the instantaneous composition of the mixture of components and on the temperature, and the control unit (10) is suitable to determine the volume (ΔV) of at least one of the components of the mixture as a function of the instantaneous composition (C_{I}) of the mixture, of the setpoint composition (C_{c}), of the volume (V_{E}) of the mixture in the tank and of the composition (C_{A}) of at least one addition component.

3. Separation system as described in claim 1 or 2, **characterised by** the fact that it includes mixing means (9) in the storage tank (3) and means for keeping the temperature of the mixture in this substantially constant.

4. Separation system as described in one of the preceding claims, **characterised by** the fact that it includes a capacitance reference probe (CS3) immersed in a fluid mixture of known composition maintained at a constant temperature, the control unit (10) being suitable to control the composition of the mixture in the storage tank (3) by reference to the intensity of the current delivered by the said reference probe.

5. Separation system as described in claim 4, **characterised by** the fact that the fluid mixture is obtained by mixing the same components as those of the mixture in the storage tank (3).

6. Separation system as described in one of the preceding claims, **characterised by** the fact that each immersed capacitance probe includes an elongate central electrode (12) surrounded by a tubular earth electrode (13) and a generator (14) of current proportional to variations in the capacitance between the electrodes.

7. Separation system as described in one of the preceding claims, **characterised by** the fact that the separation unit includes a loop (16) for separation of the components of a feed-stock (F) connected to the supply device, means (17) for injecting the feed-stock (F) into the loop and means (20) for separating from the fluid mixture the components extracted from the feed-stock (F).

8. System as described in claim 7, **characterised by** the fact that it includes auxiliary containers (17, 27) for preparation of the feed-stock (F) and circuits (25, 26) for connecting on command the outlet of the tank (3) to the said auxiliary containers.

9. System as described in one of the preceding claims, **characterised by** the fact that the separation unit (2) employs a simulated moving bed.

10. System as described in one of the preceding claims, **characterised by** the fact that the separation unit (2) includes a distillation column.

11. System as described in one of the preceding claims, **characterised by** the fact that the separation unit (2) includes one or more chromatography columns.

12. System as described in one of the preceding claims, **characterised by** the fact that the separation unit (2) is suitable to perform supercritical chromatography and includes one or more chromatography columns.

13. System as described in one of the preceding claims, **characterised by** the fact that the separation unit (2) includes one or more nanofiltration membranes.

14. System as described in one of the preceding claims, **characterised by** a separation unit (20) including falling film evaporation means (21, 22) and a condenser (23) connected to the storage tank (3).

## Patentansprüche

1. System zum Separieren von Bestandteilen, umfassend eine Separationseinheit (2) und eine Zufuhreinheit (1) für die Separationseinheit mit einem Flüssigkeitsgemisch bestehend aus mindestens zwei Komponenten unterschiedlicher Polarität, **dadurch gekennzeichnet, dass** die Zufuhreinheit einen Sammelbehälter (3), welcher aus der Separationseinheit kommendes .Gemisch aufnimmt, mindestens einen Hilfsbehälter (6), welche eine der Komponenten des Gemisches enthält, und Mittel zum Steuern der Beförderung der besagten Komponente von dem Hilfsbehälter (6) hin zu dem Sammelbehälter (3), wobei diese Mittel mindestens eine kapazitive Sonde (CS), welche vollständig in dem flüssigen Gemisch eingetaucht ist, eine Temperaturmesssonde (TS) für das Gemisch, eine Füllstandsmesssonde (NS) für das Gemisch in dem Sammelbehälter(3) umfassen, und eine Regelanordnung (10), welche mit den verschiedenen Sonden elektrisch verbunden ist und geeignet ist, das Volumen mindestens einer der in den Sammelbehälter (3) zu befördernden Komponenten zu bestimmen, umfaßt, um eine Einstellzusammensetzung für das besagte Gemisch wiederherzustellen.

2. System zur Separation gemäß dem Anspruch 1, **dadurch gekennzeichnet, dass** jede eingetauchte kapazitive Sonde (CS) geeignet ist, einen Strom in Abhängigkeit von der momentanen Zusammensetzung des Gemisches von Komponenten und von der Temperatur zu erzeugen, und die Regelanordnung (10) geeignet ist, das Volumen (ρV) mindestens einer der Komponenten des Gemisches als Funktion der Momentan-Zusammensetzung (C₁) des Gemisches der Referenz-Zusammensetzung (C_{C}), des Volumens (V_{E}) des Gemisches im Sammelbehälter und der Zusammensetzung (C_{A}) mindestens einer zusätzlichen Komponente zu bestimmen.

3. System zum Separieren nach dem Anspruch 1 oder 2, **dadurch gekennzeichnet, dass** es Mittel zum Umrühren (9) in dem Sammelbehälter (3) und Mittel zum im Wesentlichen Konstanthalten der Temperatur des Gemisches darin umfasst.

4. System zum Separieren gemäß einem der vorhergehenden Ansprüche, **dadurch gekennzeichnet, dass** es eine kapazitive Referenzsonde (CS3) beinhaltet, welche in einem flüssigen Gemisch bekannter Zusammensetzung, welches auf einer konstanten Temperatur gehalten wird, eingetaucht ist, wobei die Regelanordnung (10) geeignet ist, die Zusammensetzung des Gemisches in dem Sammelbehälter (3) mit Bezug auf die Intensität des durch die besagte Referenzsonde gelieferten Stroms zu regeln.

5. System zum Separieren gemäß dem Anspruch 4, **dadurch gekennzeichnet, dass** das flüssige Gemisch erhalten wird, indem man die gleichen Komponenten wie jene des Gemisches in dem Sammelbehälter (3) vermischt.

6. System zum Separieren gemäß einem der vorhergehenden Ansprüche, **dadurch gekennzeichnet, dass** jede eingetauchte kapazitive Sonde eine langgestreckte Mittelelektrode (12), welche von einer röhrenförmigen Massenelektrode (13) umgeben ist, und einen Generator (14) eines Stroms, welcher proportional zu den Variationen der Kapazität zwischen den Elektroden ist, beinhaltet.

7. System zum Separieren gemäß einem der vorhergehenden Ansprüche, **dadurch gekennzeichnet, dass** die Separationseinheit einen Separationskreislauf (16) für die Bestandteile einer Beschickung (F), welcher an die Zufuhreinheit angeschlossen ist, Mittel (17) zum Einspritzen der Beschickung (F) in den Kreislauf und Mittel (20) zum Separieren der aus der Beschickung (F) abgeschiedenen Bestandteile von dem flüssigen Gemisch umfasst.

8. System nach Anspruch 7, **dadurch gekennzeichnet, dass** es Hilfsbehälter (17, 27) zur Vorbereitung der Beschickung (F) und Schaltungen (25, 26) zum Anschließen des Ausgangs des Behälters (3) an die besagten Hilfsbehälter auf Befehl umfaßt.

9. System nach einem der vorhergehenden Ansprüche, **dadurch gekennzeichnet, dass** die Separationseinheit (2) ein simuliertes Fließbett aufweist.

10. System nach einem der vorhergehenden Ansprüche, **dadurch gekennzeichnet, dass** die Separationseinheit (2) eine Destillationskolonne beinhaltet.

11. System nach einem der vorhergehenden Ansprüche, **dadurch gekennzeichnet, dass** die Separationseinheit (2) eine oder mehrere Chromatographie-Kolonnen beinhaltet.

12. System nach einem der vorhergehenden Ansprüche, **dadurch gekennzeichnet, dass** die Separationseinheit (2) zum Durchführen einer überkritischen Chromatographie ausgebildet ist und eine oder mehrere Chromatographie-Kolonnen beinhaltet.

13. System nach einem der vorhergehenden Ansprüche, **dadurch gekennzeichnet, dass** die Separationseinheit (2) eine oder mehrere Nanofiltriermembranen beinhaltet.

14. System nach einem der vorhergehenden Ansprüche, **gekennzeichnet durch** eine Separationsanordnung (20), welche Mittel zur Verdampfung bei fallender dünner Schicht (21, 22) und einen mit dem Sammelbehälter (3) verbundenen Kondensator (23) beinhaltet.
